# EUROPÄISCHE PATENTSCHRIFT

(11) **EP 0 462 300 B1**
(45) Veröffentlichungstag und Bekanntmachung des Hinweises auf die Patenterteilung: **09.03.1994**
(21) Anmeldenummer: 90111554.3
(22) Anmeldetag: 19.06.1990
(51) Int. Cl.: B26D 7/06

(54) **Vorrichtung zum Verschieben eines Gutsstranges**
Apparatus for advancing a longitudinal object
Dispositif pour faire avancer un matériau sous forme de barre

(43) Veröffentlichungstag der Anmeldung: 27.12.1991
(73) Patentinhaber: Reifenhäuser, Uwe, 57614 Burglahr (DE)
(72) Erfinder: Reifenhäuser, Uwe, 57614 Burglahr (DE)
(74) Vertreter: Bauer, Hubert, Dipl.-Ing.

(56) Entgegenhaltungen:
- DE-A- 1 161 667
- DE-A- 3 909 639
- GB-A- 411 396
- NL-A- 7 102 408
- US-A- 2 464 114
- US-A- 2 801 877

## Beschreibung

Die Erfindung betrifft eine Vorrichtung zum Verschieben eines in Scheiben zu schneidenden Gutsstranges in Richtung seiner Längserstreckung. Die Vorrichtung besteht aus einer Führungsrinne und einer dem freien Querschnitt der Führungsrinne angepaßten Vorschubplatte. Diese ist mit stiftförmigen Fixierelementen versehen, die in eine Stirnseite des Gutsstranges eintreibbar sind.

Aus der NL-A-7 102 408 ist eine Schneidmaschine für Fleisch und dergleichen Konsumartikel bekannt, bei der um eine vertikale Achse rotierende Magazine zur Aufnahme des zu schneidenden Guts vorgesehen sind. Mit einer dem freien Magazinquerschnitt angepaßten Platte wird das Gut festgehalten, wobei senkrecht von der Platte ausgehende spitze Stifte in das Gut eindringen und es beim Schneidvorgang daran hindern sollen zu kippen. Wenn das zu schneidende Gut durch die Stifte hinreichend sicher gehalten werden soll, müssen die Stifte verhältnismäßig lang ausgebildet sein. Bei einer Funktion der Platte als Vorschubplatte müßte der Schneidvorgang dann jedoch bereits beendet werden, wenn ein noch verhältnismäßig großes Schneidgutreststück von den Stiften gehalten wird, damit deren Spitzen nicht in den Aktionsbereich eines Schneidorgans gelangen.

Ein beispielsweise aus in Scheiben zu schneidendem Fleisch bestehender Gutsstrang, der koaxial durch eine Rinne geschoben wird und von dem in kurzer zeitlicher Folge nacheinander Scheiben mit Hilfe rotierender Messerflügel abgeschnitten werden, neigt je nach der Beschaffenheit des zu schneidenden Materials dazu, sich nach jedem schlagartig durchgeführten Schnitt von der Bodenfläche der Rinne abzuheben, und ist dadurch vorübergehend führungslos. Erfolgt unterdessen bereits der nächste Schnitt, wird zwar durch die Schneidkraft des Flügelmessers der Gutsstrang erneut gegen die Bodenfläche der Rinne gepreßt. Eine zuvor erfolgte axiale Verlagerung des Gutsstranges läßt sich jedoch nicht hinreichend exakt durchführen, so daß geometrisch ungenaue Scheiben anfallen.

Um einen aus Fleisch bestehenden Gutsstrang auch während der Schneidintervalle am Boden einer Führungsrinne zu halten und den Gutsstrang daran zu hindern, schwingende Bewegungen auszuführen, die sich auf die Vorrichtung insgesamt übertragen und deren Laufruhe beeinträchtigen, ist es bekannt, eine gegen eine Stirnseite anpreßbare, den Strangvorschub bewerkstelligende, in der Führungsrinne verschiebbare Vorschubplatte mit stiftförmigen Fixierelementen zu versehen, die in die betreffende Stirnseite des Gutsstranges eintreibbar sind. Die sichelförmig gebogenen, mit Spitzen nach unten gegen den Boden der Führungsrinne weisenden Fixierelemente sind in Bohrungen der Vorschubplatte gelagert und lassen sich nur dadurch in die Stirnseite des Fleischstranges eintreiben, indem die axial verlagerbaren Fixierelemente erst über die Ebene der Anschlagplatte der Vorschubplatte vorgeschoben werden, nachdem die Anschlagplatte fest gegen die betreffende Stirnseite des Fleischstranges anliegt. Ebenso läßt sich ein Fleischstrangreststück von der Vorschubplatte nur dadurch lösen, daß die Fixierelemente zuvor wieder in ihre Ausgangslage zurückbewegt werden. Zudem verursachen die sichelförmigen Fixierelemente verhältnismäßig große, nicht zu Scheiben verarbeitbare Fleischstrangreststücke, wodurch die aus einem Fleischstrang erzielbare Scheibenanzahl je nach der Fleischstranglänge bis zu 10 % gemindert werden kann. Die Kopplung des Fleischstranges mit der Vorschubplatte und die Entkopplung des Fleischstrangreststückes von der Vorschubplatte ist zudem mit einem verhältnismäßig großen Bedienungsaufwand verbunden, der nur dadurch auf ein noch vertretbares Maß zu begrenzen ist, daß die zahlreichen Fixierelemente auf der dem Fleischstrang abgewandten Seite der Vorschubplatte miteinander verbunden sind. Dadurch kann die Betätigung aller Fixierelemente über einen an den Verbindungsmitteln vorgesehenen Handgriff erfolgen. Die synchronisierte Betätigung aller Fixierelemente hat allerdings einen gravierenden Nachteil. Trifft eines der in die Stirnseite des Fleischstranges eindringenden Fixierelemente beispielsweise auf ein Knochenstück, sind alle Fixierelemente daran gehindert, in den Fleischstrang weiter einzudringen, so daß eine ordnungsgemäße Fixierung des Fleischstranges dadurch verhindert werden kann.

Der Erfindung liegt die Aufgabe zugrunde, eine Vorrichtung der eingangs beschriebenen Art so auszubilden, daß sich darin ohne jeglichen Bedienungsaufwand ein Gutsstrang sicher fixieren und weitgehend verlustfrei in Scheiben schneiden läßt sowie ein unvermeidbares Gutsstrangreststück gleichfalls mühelos entfernt werden kann.

Zur Lösung dieser Aufgabe wird von einer Vorrichtung der im Oberbegriff des Anspruchs 1 genannten gattungsgemäßen Art ausgegangen, welche erfindungsgemäß die im kennzeichnenden Teil desselben angegebenen Merkmale aufweist.

Durch die erfindungsgemäße starre Anordnung der Fixierelemente auf der Vorschubplatte entfällt deren Betätigung. Die starre Anordnung der Fixierelemente ist zudem weniger aufwendig bezüglich der Herstellung und Wartung einer solchen Vorrichtung im Vergleich zu einer Vorrichtung mit bewegbar gelagerten Fixierelementen. Ermöglicht wird die starre Anordnung der Fixierelemente durch deren erfindungsgemäße Ausrichtung in einem Winkel < 90° geneigt zur Ebene der Vorschubplatte, wobei die Spitzen der Fixierelemente in Richtung des Bodens der Rinne weisen. Wird nämlich die Vorschubplatte mit den Fixierelementen gegen die Stirnseite eines Gutsstranges gepreßt, dringen die Spitzen der Fixierelemente in den Gutsstrang ein und fixieren diesen umso intensiver, je mehr der Gutsstrang dazu neigen sollte sich aufzubäumen und vom Boden der Rinne abzuheben. Die Fixierelemente verhalten sich dabei wie Widerhaken, wobei es auf eine besonders große Eindringtiefe in das Gut nicht ankommt, da eine Gleitbewegung der Stirnfläche des Gutsstranges über die Auflagefläche der Vorschubplatte durch die Fixierelemente völlig ausgeschlossen ist. Selbst eine nicht vollständig gegen die Vorschubplatte anliegende Stirnfläche des Gutsstranges beeinträchtigt nicht den sicheren Halt des Gutsstranges in der Führungsrinne. Andererseits kann sich ein Gutsstrangreststück beim Zurückziehen der Vorschubplatte selbsttätig von den Fixierelementen lösen, indem das in der Regel nicht vom Boden der Führungsrinne unterstützte kleine Reststück durch die Schwerkraft in Bodenrichtung gezogen wird und von den Fixierstiften frei abfallen kann.

Nach einer Ausgestaltung der Erfindung ist jedes Fixierelement aus einer dreiecksförmigen Zunge mit einer gleichfalls dreiecksförmigen Zungenwurzel gebildet und in dieser Form aus dem Material der Vorschubplatte gestanzt, wobei die Zunge mit einer sie in Längsrichtung speerspitzenförmig verformenden Sicke versehen ist.

Durch diese Ausgestaltung sind die Fixierelemente ohne zusätzlichen Materialaufwand in einfacher Weise aus dem Material der Vorschubplatte herstellbar und verfügen selbst bei einer sehr schlanken Ausbildung über ein außerordentlich hohes Biegewiderstandsmoment.

Durch Versuche, bei denen zahlreiche Fleischstränge unterschiedlicher Beschaffenheit eingesetzt wurden, hat sich gezeigt, daß die Fixierelemente ihre Funktion dann besonders optimal erfüllen, wenn jede Zunge aus der Ebene der Vorschubplatte so weit herausgebogen ist, bis die Längskanten der Zunge und die Ebene der Vorschubplatte einen Winkel von 30° einschließen. Dabei wurde herausgefunden, daß die Länge jeder Zunge bis zur Zungenwurzel 15 mm und einschließlich der Zungenwurzel 22 mm betragen kann, um eine gute Fixierwirkung zu erzielen.

Nach weiteren Ausgestaltungen der Erfindung sind die Zungen in gleichmäßig verteilten Reihen über die Fläche der Vorschubplatte angeordnet, wobei vorzugsweise die Zungen einer Reihe zu den Zungen benachbarter Reihen um den halben Abstand der Zungen voneinander versetzt angeordnet sind.

Durch diese Ausgestaltung ergibt sich ein gleichmäßig über die Stirnseite eines Gutsstranges verteilter Angriff der Fixierelemente, wodurch sich der Gutsstrang sicher innerhalb der Führungsrinne halten läßt.

In der Zeichnung ist ein Ausführungsbeispiel einer erfindungsgemäßen Vorrichtung dargestellt und im folgenden näher beschrieben. Es zeigen:

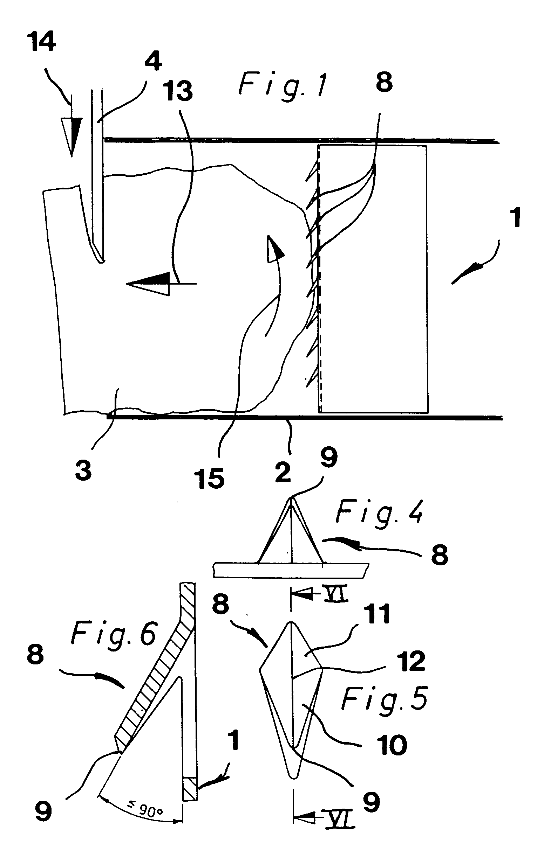

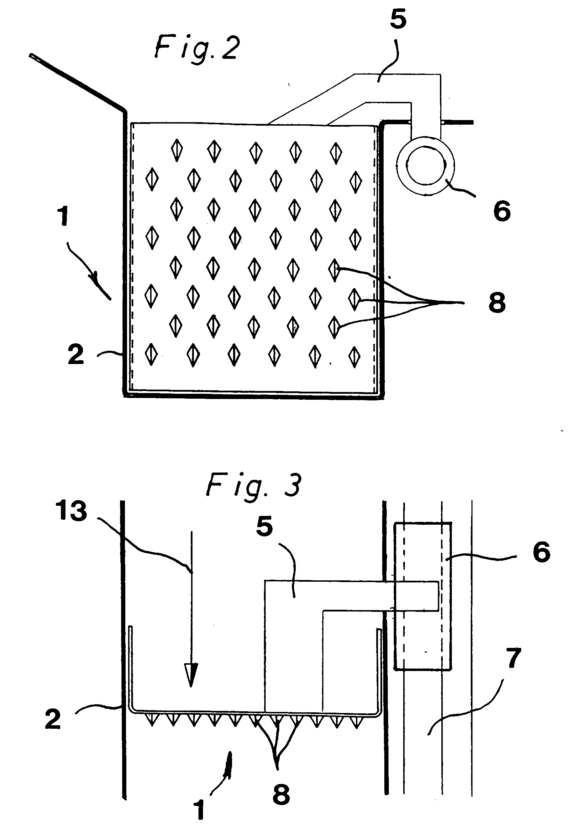

- Fig. 1: eine Seitenansicht der Vorrichtung;
- Fig. 2: eine Draufsicht auf die Vorrichtung;
- Fig. 3: einen Grundriß der Vorrichtung;
- Fig. 4: einen Grundriß eines Fixierelements;
- Fig. 5: eine Draufsicht auf das Fixierelement;
- Fig. 6: einen Schnitt durch das Fixierelement nach der Linie VI - VI der Fig. 5.

Die Vorrichtung besteht im wesentlichen aus einer Vorschubplatte 1, die in einer Führungsrinne 2 zu deren Längserstreckung verschiebbar gelagert ist, um beispielsweise einen Fleischstrang 3 taktweise so vorzuschieben, daß sich davon mit Hilfe eines Messers 4 Scheiben abtrennen lassen. Ein an der Rückseite der Vorschubplatte 1 befestigter Antriebsarm 5 ist mit einer Führungshülse 6 versehen, die über eine parallel zur Führungsrinne 2 angeordnete Spindel 7 verlagerbar ist.

Die Vorschubplatte 1 ist auf ihrer dem Fleischstrang 3 zugewandten Seite mit Fixierelementen 8 bestückt, die in einem Winkel von 30° zur Ebene der Vorschubplatte 1 so geneigt angeordnet sind, daß die Spitze 9 eines jeden Fixierelements 8 zum Boden der Rinne 2 weist.

Jedes Fixierelement 8 ist aus einer dreiecksförmigen Zunge 10 mit einer gleichfalls dreiecksförmigen Zungenwurzel 11 gebildet und aus dem Material der Vorschubplatte 1 gestanzt. In Längsrichtung ist das Fixierelement 8 mit einer Sicke 12 versehen, wodurch das Fixierelement 8 auf der dem Fleischstrang 3 zugewandten Seite die Form einer Speerspitze erhält.

Wird nach einer Vorschubbewegung des Fleischstrangs 3 in Richtung des Pfeils 13 das Messer 4 in Richtung des Pfeils 14 quer durch den Fleischstrang 3 geführt, neigt dessen zur Vorschubplatte 1 hin weisendes Ende dazu, sich in Richtung des Pfeils 15 aufzubäumen. Dies verhindern die dabei zunehmend in den Fleischstrang 3 eindringenden Fixierelemente 8, welche es darüber hinaus nach dem Abtrennen der letzten Scheibe von einem Rest des Fleischstrangs 3 auch ermöglichen, daß dieser infolge der an ihm wirkenden Schwerkraft beim Zurückziehen der Vorschubplatte 1 aus den Fixierelementen herausfällt.

## Patentansprüche

1. Vorrichtung zum Verschieben eines in Scheiben zu schneidenden Gutsstranges (3) in Richtung seiner Längserstreckung, bestehend aus einer Führungsrinne (2) und einer deren freiem Querschnitt angepaßten Vorschubplatte (1), die mit in eine Stirnseite des Gutsstranges (3) eintreibbaren, stiftförmigen Fixierelementen (8) versehen ist, dadurch gekennzeichnet, daß die Mittelachse eines jeden starr mit der Vorschubplatte (1) verbundenen Fixierelements (8) in einem Winkel < 90° geneigt zur Ebene der Vorschubplatte (1) ausgerichtet ist und die Spitze (9) des Fixierelements (8) in Richtung des Bodens der Führungsrinne (2) weist.

2. Vorrichtung nach Anspruch 1, dadurch gekennzeichnet, daß jedes Fixierelement (8) aus einer dreiecksförmigen Zunge (10) mit einer gleichfalls dreiecksförmigen Zungenwurzel (11) gebildet und in dieser Form aus dem Material der Vorschubplatte (1) gestanzt ist, wobei das Fixierelement (8) mit einer es in Längsrichtung speerspitzenförmig verformenden Sicke (12) versehen ist.

3. Vorrichtung nach Anspruch 1 und 2, dadurch gekennzeichnet, daß jedes Fixierelement (8) aus der Ebene der Vorschubplatte (1) so weit herausgebogen ist, bis die Längskanten der Zunge (10) und die Ebene der Vorschubplatte (1) einen Winkel von 30° einschließen.

4. Vorrichtung nach mindestens einem der Ansprüche 1 bis 3, dadurch gekennzeichnet, daß die Lange jedes Fixierelements (8) bis zur Zungenwurzel 15 mm und einschließlich der Zungenwurzel 22 mm beträgt.

5. Vorrichtung nach mindestens einem der Ansprüche 1 bis 4, dadurch gekennzeichnet, daß die Fixierelemente (8) in gleichmäßig verteilten Reihen über die Fläche der Vorschubplatte (1) angeordnet sind.

6. Vorrichtung nach mindestens einem der Ansprüche 1 bis 5, dadurch gekennzeichnet, daß die Fixierelemente (8) einer Reihe zu den Fixierelemente (8) benachbarter Reihen um den halben Abstand der Fixierelemente (8) voneinander versetzt angeordnet sind.

## Claims

1. An apparatus for displacing a length of material (3) to be cut into slices in the direction of its longitudinal extent, consisting of a guide channel (2) and a feed plate (1), which is matched to the free cross-section of the latter, and which is provided with pin-shaped fixing elements (8) which can be driven into an end face of the length of material (3), characterised in that the centre line of each fixing element (8) rigidly attached to the feed plate (1) is aligned sloping at an angle < 90° to the plane of the feed plate (1) and the point (9) of the fixing element (8) points towards the base of the guide channel (2).

2. An apparatus according to claim 1, characterised in that each fixing element (8) is formed from a triangular tongue (10) with a tongue root (11) which is likewise triangular and is punched in this form from the material of the feed plate (1), wherein the fixing element (8) is provided with a crease (12) which forms it into the shape of a spear tip in the longitudinal direction.

3. An apparatus according to claim 1 and 2, characterised in that each fixing element (8) is bent out of the plane of the feed plate (1) until the angle between the longitudinal edges of the tongue (10) and the plane of the feed plate (1) is 30°.

4. An apparatus according to at least one of claims 1 to 3, characterised in that the length of each fixing element (8) is 15 mm as far as the tongue root and 22 mm including the tongue root.

5. An apparatus according to at least one of claims 1 to 4, characterised in that the fixing elements (8) are arranged in uniformly distributed rows over the face of the feed plate (1).

6. An apparatus according to at least one of claims 1 to 5, characterised in that the fixing elements (8) of one row are disposed offset in relation to the fixing elements (8) in adjacent rows by half the distance of the fixing elements (8) from each other.

## Revendications

1. Dispositif pour faire avancer une barre de produit (3), à découper en tranches, dans la direction de sa longueur, constitué d'une goulotte de guidage (2) et d'une plaque d'avancement (1), adaptée à la section transversale libre de la goulotte et munie d'éléments d'immobilisation (8) en forme de picots et susceptibles d'être enfoncés dans une face frontale de la barre de produit (3), caractérisé en ce que l'axe médian d'un élément d'immobilisation (8), relié rigidement à la plaque d'avancement (1), est incliné d'un angle < 90° par rapport au plan de la plaque d'avancement (1), et la pointe (9) de l'élément d'immobilisation (8) est tournée dans la direction du fond de la goulotte de guidage (2).

2. Dispositif selon la revendication 1, caractérisé en ce que chaque élément d'immobilisation (8) est formé d'une languette (10) triangulaire, ayant une racine de languette (11) également triangulaire et est réalisé sous cette forme par estampage dans le matériau de la plaque d'avancement (1), l'élément d'immobilisation (8) étant muni d'une moulure (12) se déformant en direction longitudinale pour prendre une forme de fer de lance.

3. Dispositif selon la revendication 1 ou 2, caractérisé en ce que chaque élément d'immobilisation (8) est replié à partir du plan de la plaque d'avancement (1), de sorte que les arêtes longitudinales de la languette (10) et le plan de la plaque d'avancement (1) fassent un angle de 30°.

4. Dispositif selon au moins l'une des revendications 1 à 3, caractérisé en ce que la longueur de chaque élément d'immobilisation (8) jusqu'à la racine de languette est de 15 mm et, y compris la racine de languette, de 22 mm.

5. Dispositif selon au moins l'une des revendications 1 à 4, caractérisé en ce que les éléments d'immobilisation (8) sont disposés en rangées réparties régulièrement sur la surface de la plaque d'avancement (1).

6. Dispositif selon au moins l'une des revendications 1 à 5, caractérisé en ce que les éléments d'immobilisation (8) d'une rangée sont décalés par rapport aux éléments d'immobilisation (8) des rangées voisines, de la moitié de l'intervalle entre les éléments d'immobilisation (8).
